# EUROPEAN PATENT SPECIFICATION

(11) **EP 3 009 054 B1**
(45) Date of publication and mention of the grant of the patent: **10.10.2018**
(21) Application number: 14810884.8
(22) Date of filing: 06.06.2014
(51) Int. Cl.: A47J 37/06

(54) **AIR HEATING TYPE COOKING PAN**
BRATPFANNE MIT LUFTHEIZUNG
USTENSILE DE CUISSON DE TYPE CHAUFFAGE À AIR

(30) Priority: 10.06.2013 CN 201310231135
(43) Date of publication of application: 20.04.2016
(73) Proprietor: Mai, Tianhong, Foshan, Guangdong 528300 (CN)
(72) Inventor: Mai, Tianhong, Foshan, Guangdong 528300 (CN)
(74) Representative: Müller Schupfner & Partner Patent- und Rechtsanwaltspartnerschaft mbB
(86) International application number: PCT/CN2014/079357
(87) International publication number: WO 2014/198199

(56) References cited:
- CN-A- 102 764 063
- CN-A- 103 006 087
- CN-A- 103 271 632
- CN-U- 202 051 500
- CN-U- 202 287 722
- CN-U- 202 408 543
- CN-U- 203 290 707
- CN-Y- 201 349 984
- KR-B1- 101 303 685
- US-A- 5 466 912
- US-B1- 6 265 697

## Description

### BACKGROUND OF THE INVENTION

### Technical Field

The present invention relates to a technical field of electric heating cooking appliances, in particular, to an air heating type cooking pan.

### Description of Related Art

An existing air heating type cooking pan (air heating type frying pan) usually consists of a cover body, a pan body, a stirring paddle and a hot air generating device; the cover body is disposed on the pan body; the stirring paddle is disposed at the bottom in the pan body; one end of the stirring paddle is located in the center of the pan body, and is in connection with a motor in a transmission way; the hot air generating device is disposed on one side of the pan body and blows hot air to the space surrounded by the pan body and the cover body so as to heat the food in the pan body. The direction in which the hot air generating device blows air is fixed, so the interior of the pan body cannot be heated uniformly. Therefore, manufacturers install a stirring paddle in the pan body to stir food during heating so as to uniformly heat the food. But, such structure has the following defects in actual application: (1) The stirring paddle can only stir small pieces of food, and cannot stir large pieces of food, so the cooking scope of this cooking pan is limited; (2) when the pan body is used to fry or bake foods, the stirring paddle does not work; (3) the pan body is internally provided with a stirring paddle, so it is inconvenient to clean the pan body. A further air heating type cooking pan is known from CN-U-202051500, which discloses an air heating type cooking pan according to the preamble of independent claim 1.

### BRIEF SUMMARY OF THE INVENTION

The objective of the present invention is to provide an air heating type cooking pan which has a simple and reasonable structure, heats uniformly, is easy to clean and is low in cost, to overcome the defects in the prior art.

The objective of the present invention is fulfilled in this way:
An air heating type cooking pan consists of a machine body, a cover body and a pan body; the machine body is provided with a heating chamber and a hot air generating device which blows hot air into the heating chamber, wherein the air heating type cooking pan also consists of a turntable motor and at least three support roller wheels; the turntable motor is disposed in the machine body; a motor shaft of the turntable motor drives the pan body to rotate via a driving member; the support roller wheels are circumferentially distributed and located between the bottom of the pan body and the bottom of the heating chamber. The machine body consists of a bottom shell, a thermal insulating tray, an upper shell and a lateral plate; the thermal insulating tray and the upper shell are respectively disposed on the bottom shell; the top face of the thermal insulating tray is recessed downward to form the heating chamber with an opened top; the upper shell is located on one side of the opening of the heating chamber and is connected with the lateral plate; and the surface of the lateral plate is provided with a hot air outlet. The top of the lateral plate inclines toward the heating chamber.

The objective of the present invention can also be fulfilled by the following technical measures.

As a more specific solution, the driving member is a non-round rotary head; the non-round rotary head is located in the center of the bottom in the heating chamber; the bottom of the pan body is provided with a non-round groove corresponding to the non-round rotary head; the non-round rotary head and the non-round groove are matched in an inserting way; the turntable motor is located at the bottom out of the heating chamber; and the motor shaft penetrates the bottom of the heating chamber to be connected with the non-round rotary head.

The support roller wheels are circumferentially distributed at an equal interval around the motor shaft; the support roller wheels are disposed on a wheel stand; and the wheel stand and the bottom of the heating chamber are fixed.

The hot air generating device is disposed in the space surrounded by the bottom shell and the upper shell; the hot air generating device consists of a centrifuge wind wheel, a blowing motor, a fixed mount, a heating element and a thermal insulating fairing; the fixed mount is connected with the thermal insulating tray; one end of the blowing motor is connected with the outer side of the fixed mount, while the other end faces an air suction opening on the bottom shell;
the centrifuge wind wheel is disposed on the inner side of the fixed mount and is in connection with the blowing motor in a transmission way; the heating element is disposed at the upper end of the fixed mount and close to the hot air outlet; the thermal insulating fairing is fixed at the upper end of the fixed mount and located on the outer side of the heating element; the thermal insulating fairing contains the heating element inside and together with fixed mount forms a hot air channel; and the port of the hot air channel corresponds to the hot air outlet.

An air channel is formed between the bottom shell and the thermal insulating tray; the air channel communicates with the air suction opening of the centrifuge wind wheel; the surface of the heating chamber is provided with a hot air recycling hole; and the hot air recycling hole connects the heating chamber and the air channel. By the above structure, the hot air in the heating chamber passes the heating element circularly, greatly saving energy and ensuring high-temperature cooking.

The rear end of the blowing motor is provided with radiating fins; and the radiating fins are in connection with the rotating shaft of the blowing motor in a transmission way.

The surface of the lateral plate is also provided with a lamp body; the cover body is a transparent cover; and the top of the cover body is provided with a handle. Such structure ensures that the hot air outlet points at the inside of the pan body; the lamp body is used for providing lighting for the pan body, and with the transparent cover body, a user can observe the cooking condition of the food via the transparent cover body.

The upper shell is internally provided with a timer and a microswitch; an adjusting shaft of the timer extends out of the upper shell and is connected with an adjusting knob; a button of the microswitch is connected with one end of a switching drive rod; the other end of the switching drive rod extends out of the lateral plate; in the process that the cover body is closed downward, the cover body triggers the switching drive rod, the microswitch is closed. The timer is used for controlling the working time of the machine. The microswitch can be connected to the power circuit so as to ensure that the machine stops working when the cover body is opened, thus preventing the hot air from directly blowing user. The use is safer.

A bracket is also included. The bracket is disposed in the pan body, including a bracket mesh, a short-leg rack and a long-leg rack; the short-leg rack and the long-leg rack are respectively disposed on the upper and lower surfaces of the bracket mesh. The bracket can be turned for use, thus generating different bearing heights.

The present invention has the following beneficial effects:
When the air heating type cooking pan is in the heating process, the pan body rotates relative to the hot air outlet, so each part of the pan body has the opportunity to be directly blown by the hot air from the hot air outlet, thus achieving the purpose of uniform heating.

The support roller wheels are disposed between the bottom of the pan body and the heating chamber, so that the pan body rotates more smoothly.

The pan body has no stirring paddle inside, can be easily taken out from the machine body, and is convenient to clean.

### BRIEF DESCRIPTION OF THE SEVERAL VIEWS OF THE DRAWINGS

Figure 1 is a schematic view of the breakdown structure of one embodiment of the present invention.
Figure 2 is a schematic view of the assembled structure of Figure 1.
Figure 3 is a sectional structural view of the present invention.
Figure 4 is a structural view of the pan body.

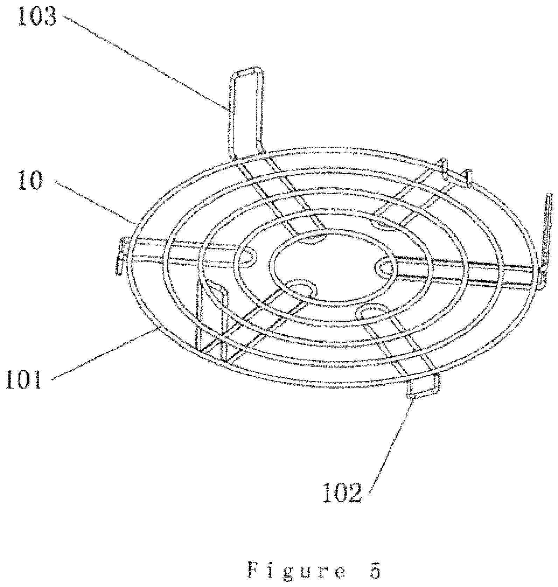

Figure 5 is a structural view of the bracket.

### DETAILED DESCRIPTION OF THE INVENTION

The present invention is described in further detail with reference to the attached drawings and embodiments.

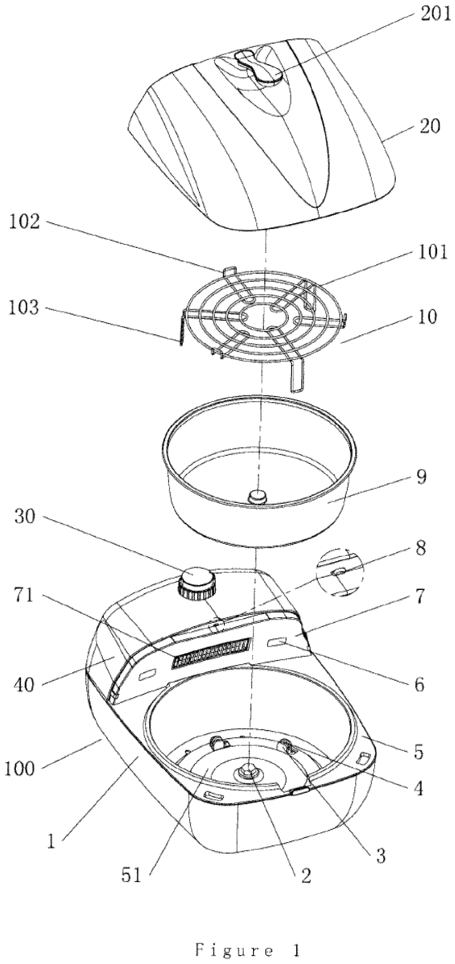

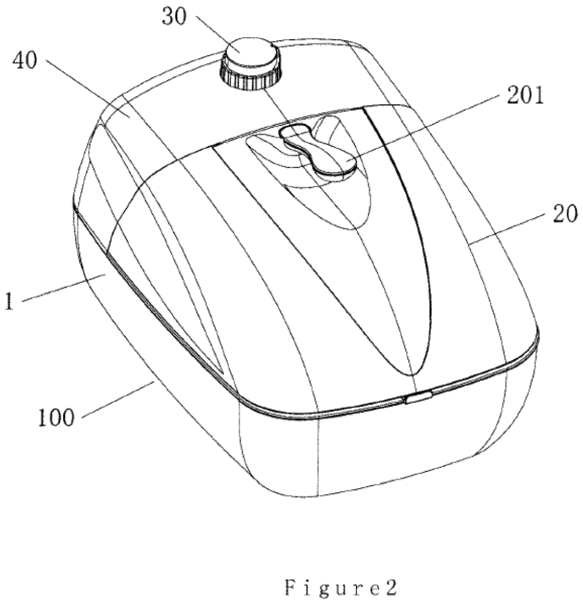

As shown in Figures 1-3, an air heating type cooking pan consists of a machine body 100, a cover body 20 and a pan body 9; the machine body 100 is provided with a heating chamber 51 and a hot air generating device 60 which blows hot air into the heating chamber 51; one side of the heating chamber 51 is open; the pan body 9 is placed in the heating chamber 51 from the opened side of the heating chamber 51, and the cover body 20 covers outer side the opening of the heating chamber 51. Wherein, the air heating type cooking pan also consists of a rotary mechanism and at least three support roller wheels 4 (six support roller wheels 4 in this embodiment); the rotary mechanism is disposed in the machine body 100, driving the pan body 9 to rotate via a driving member. The rotary mechanism consists of a motor, for example a turntable motor 50, and the motor shaft 501 of the turntable motor 50 is directly connected to the pan body 9 and drives the pan body 9to rotate. A plurality of support roller wheels 4 are circumferentially distributed and located between the bottom of the pan body 9 and the heating chamber 51.

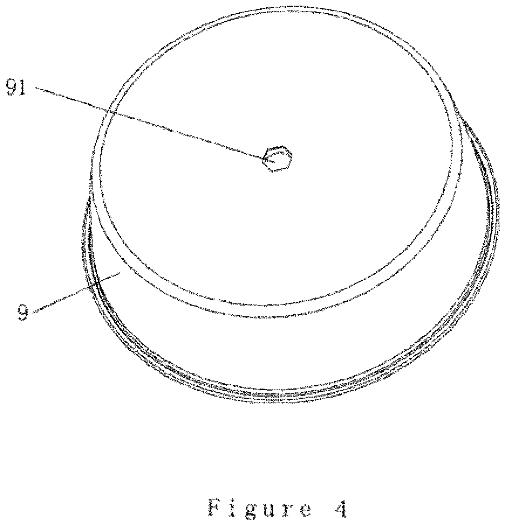

As a further specific solution, the driving member can be a non-round rotary head 2, as shown in Figure 4: a polygonal rotary head, the non-round rotary head 2 is located at the bottom in the heating chamber 51; the bottom of the pan body 9 is provided with a non-round groove 91 with a shape and a size corresponding to the non-round rotary head 2; the non-round rotary head 2 is matched with non-round groove 91 in an inserting way. Preferably, the non-round rotary head 2 is disposed at the center of the bottom of the heating chamber 51, and the non-round groove 91 is disposed at the center of the bottom of the pan body. The turntable motor 50 is located on the outer side of the bottom of the heating chamber 51; the motor shaft 501 penetrates through the bottom of the heating chamber 51 and is connected with the non-round rotary head 2; during rotary working, the turntable motor 50 drives the non-round rotary head 2 to rotate, and the pan body 9 rotates in the heating chamber 51 by the effect of the match of the round rotary head 2 and the non-round groove 91 such that the hot air blown uniformly exchanges heat with the food in the pan body 9.

The support roller wheels 4 are circumferentially distributed at an equal interval around the motor shaft 501; the support roller wheels 4 are disposed on the wheel stand 3, and the wheel stand 3 and the bottom of the heating chamber 51 are fixed. In this way, the rotary pan body 9 can smoothly move along the plurality of support roller wheels 4 at the bottom.

An a more specific solution, as shown in Figure 1, the machine body 100 consists of a bottom shell 1, a thermal insulating tray 5, an upper shell 40 and a lateral plate 7; the thermal insulating tray 5 and the upper shell 40 are respectively disposed on the bottom shell 1; the top face of the thermal insulating tray 5 is recessed downward to form the heating chamber 51 with an opened top; the upper shell 40 is located on one side of the opening of the heating chamber 51 and is connected with the lateral plate 7; and the surface of the lateral plate 7 is provided with a hot air outlet 71.

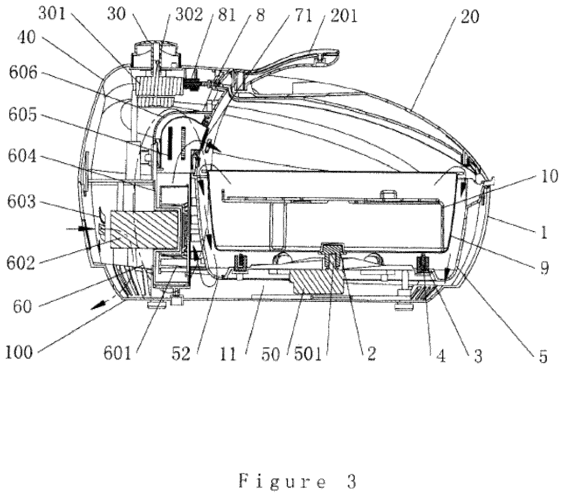

From the sectional structure of Figure 3, it can be seen that, the hot air generating device 60 is disposed in the space surrounded by the bottom shell 1 and the upper shell 40; the hot air generating device 60 consists of a centrifuge wind wheel 601, a blowing motor 602, a fixed mount 604, a heating element 605 and a thermal insulating fairing 606; the fixed mount 604 is connected with the thermal insulating tray 5; one end of the blowing motor 602 is connected with the outer side of the fixed mount 604, while the other end faces an air suction opening on the bottom shell 1; the centrifuge wind wheel 601 is disposed on the inner side of the fixed mount 604 and is in connection with the blowing motor 602 in a transmission way; the heating element 605 is disposed at the upper end of the fixed mount 604 and close to the hot air outlet 71; the thermal insulating fairing 606 is fixed at the upper end of the fixed mount and located on the outer side of the heating element 605; the thermal insulating fairing 606 contains the heating element inside and together with fixed mount forms a hot air channel; and the port of the hot air channel corresponds to the hot air outlet 71. The heating element 605 is of PTC (Positive Temperature Coefficient) material; during working, driven by the centrifuge wind wheel 601, cold air enters the machine body via an external suction opening, quickly heated by the PTC heating element and then converted into the hot air; guided by the thermal insulating fairing 606, the hot air enters the heating chamber 51 via the air outlet 71 to exchange heat with the food in the pan body 9 of the heating chamber 51.

An air channel 11 is formed between the bottom shell 1 and the thermal insulating tray 5; the air channel 11 communicates with the air suction opening of the centrifuge wind wheel 601; the surface of the heating chamber 51 is provided with a hot air recycling hole 52; and the hot air recycling hole 52 connects the heating chamber 51 and the air channel 11.

During heating, the centrifuge wind wheel 601 rotates at a high speed; negative pressure is formed in the air channel 11; the hot air is sucked into the air channel 11 via the hot air recycling hole 52 after heating the food; next, the recycled hot air re-enters the hot air generating device 60 and is reheated and blown into the heating chamber 51 to heat the pan body 9. See the full-line arrow in Figure 3.

The other end (namely the one facing the air suction opening) of the blowing motor 602 is provided with radiating fins 603, and the radiating fins 603 are in connection with the rotating shaft of the blowing motor 602 in a transmission way. When the blowing motor 602 works, the radiating fins 603 are driven to rotate; the radiating fins 603 help the machine body 100 suck external cold air into the bottom shell 1; the cold air passes the surface of the blowing motor 602 and then is exhausted out of the bottom shell via the exhaust outlet. See the dotted-line arrow in Figure 3. Thus, the blowing motor 602 is cooled, and the service life of the blower motor 602 is effectively enhanced.

As shown in Figure 3, the hot air outlet 71 is located on the lateral plate 7 and horizontally higher than the pan body 9, the top of the lateral plate 7 inclines towards the heating chamber 51 such that the hot air outlet points at the pan body and that the blown air hot fully heats the food at the bottom of the pan body 9; the surface of the lateral plate 7 is also provided with a lamp body 6; the cover body 20 is a transparent cover; and the top of the cover body 20 is provided with a handle 201.

The upper shell 40 is internally provided with a timer 301 and a microswitch 81; the adjusting shaft 302 of the timer 301 extends out of the upper shell 40 to be connected with the adjusting knob 30. The user can control the time for heating the food by rotating the adjusting knob 30. The button of the microswitch 81 is connected with one end of a switching drive rod 8; the other end of the switching drive rod 8 extends out of the lateral plate 7; in the process that the cover body 20 is closed downward, the cover body 20 triggers the switching drive rod 8, and then the microswitch 81 is closed. The microswitch can be connected to the power circuit so as to ensure that the machine stops working when the cover body is opened, thus preventing the hot air from directly blowing user. The use is safer.

The present invention also consists of a bracket 10; the bracket 10 is disposed in the pan body 9; the bracket 10 consists of a bracket mesh 101, a short-leg rack 102 and a long-leg rack 103; the short-leg rack 102 and the long-leg rack 103 are respectively disposed on the upper and lower surfaces of the bracket mesh 101. The bracket 10 is optional (for example, used during food baking).

Working principle: The cold air enters the machine body from the outer side, is guided by the centrifuge wind wheel 601, quickly heated by the PTC heating element and then converted into the hot air; the hot air is guided by the thermal insulating fairing 606 to enter the heating chamber 51 and exchanges heat with the food in the rotating pan body 9 in the heating chamber 51; wherein, the motor shaft 501 of the turntable motor 50 drives the pan body 9 to rotate via the driving member, and the pan body 9 rotates more smoothly when rotating along the bottom support roller wheels 4.

In the air heating type cooking pan of the present invention, the pan body is set to self-rotate in the heating chamber through the rotary mechanism to uniformly heat the food in the pan body; the self-rotating pan body does not use the traditional stirring paddle and therefore can uniformly heat the food in the pan even during frying and baking food, and it is easy to clean.

## Claims

1. An air heating type cooking pan, comprising a machine body (100), a cover body (20) and a pan body (9); said machine body (100) being provided with a heating chamber (51) and a hot air generating device (60) which blows hot air into said heating chamber (51), said pan body (9) being disposed in said heating chamber (51); wherein said air heating type cooking pan comprises a turntable motor (50) and at least three support roller wheels (4); said turntable motor (50) is disposed in said machine body (100); a motor shaft (501) of said turntable motor (50) drives said pan body (9) to rotate via a driving member; said at least three support roller wheels (4) are circumferentially distributed and located between the bottom of said pan body (9) and the bottom of said heating chamber (51); **characterised in that** said machine body (100) comprises a bottom shell (1), a thermal insulating tray (5), an upper shell (40) and a lateral plate (7); the thermal insulating tray (5) and the upper shell (40) are respectively disposed on the bottom shell (1); the top face of the thermal insulating tray (5) is recessed downward to form the heating chamber (51) with an opened top; the upper shell (40) is located on one side of the opening of the heating chamber (51) and is connected with the lateral plate (7); and the surface of the lateral plate (7) is provided with a hot air outlet (71); the top of the lateral plate (7) inclines towards said heating chamber (51).

2. The air heating type cooking pan according to claim 1, **characterized in that**, said driving member is a non-round rotary head (2); the non-round rotary head (2) is located at the bottom in the heating chamber (51); the bottom of the pan body (9) is provided with a non-round groove (91) corresponding to the non-round rotary head (2); the non-round rotary head (2) and the non-round groove (91) are matched in an inserting way; said turntable motor (50) is located on the outer side of the bottom of the heating chamber (51); the motor shaft (501) penetrates the bottom of the heating chamber (51) to be connected with the non-round rotary head (2).

3. The air heating type cooking pan according to claim 2, **characterized in that**, said support roller wheels (4) are circumferentially distributed at an equal interval around the motor shaft (501); the support roller wheels (4) are disposed on the wheel stand (3), and the wheel stand (3) and the bottom of the heating chamber (51) are fixed.

4. The air heating type cooking pan according to claim 1, **characterized in that**, said hot air generating device (60) is disposed in the space surrounded by the bottom shell (1) and the upper shell (40); said hot air generating device (60) consists of a centrifuge wind wheel (601), a blowing motor (602), a fixed mount (604), a heating element (605) and a thermal insulating fairing (606); said fixed mount (604) is connected with said thermal insulating tray (5); the front end of said blowing motor (602) is connected with the outer side of said fixed mount (604), while the other end faces an air suction opening on the bottom shell (1); the centrifuge wind wheel (601) is disposed on the inner side of the fixed mount (604) and is in connection with the blowing motor (602) in a transmission way; the heating element (605) is disposed at the upper end of the fixed mount (604) and close to the hot air outlet (71); the thermal insulating fairing (606) is fixed at the upper end of the fixed mount and located on the outer side of the heating element (605); the thermal insulating fairing (606) contains the heating element inside and together with fixed mount forms a hot air channel; and the port of the hot air channel corresponds to the hot air outlet (71).

5. The air heating type cooking pan according to claim 4, **characterized in that**, an air channel (11) is formed between said bottom shell (1) and said thermal insulating tray (5); said air channel (11) communicates with said air suction opening of the centrifuge wind wheel (601); the surface of said heating chamber (51) is provided with a hot air recycling hole (52); and said hot air recycling hole (52) connects said heating chamber (51) and said air channel (11).

6. The air heating type cooking pan according to claim 4, **characterized in that**, the rear end of said blowing motor (602) is provided with radiating fins (603), and said radiating fins (603) are in connection with a rotating shaft of said blowing motor (602) in a transmission way.

7. The air heating type cooking pan according to claim 1, **characterized in that**, the surface of said lateral plate (7) is also provided with a lamp body (6); said cover body (20) is a transparent cover; and the top of said cover body (20) is provided with a handle (201).

8. The air heating type cooking pan according to claim 1, **characterized in that**, said upper shell (40) is internally provided with a timer (301) and a microswitch (81); an adjusting shaft (302) of said timer (301) extends out of the upper shell (40) to connect the adjusting knob (30); a button of said microswitch (81) is connected with one end of a switching drive rod (8); the other end of said switching drive rod (8) extends out of said lateral plate (7); in the process that the cover body (20) is closed downward, the cover body (20) triggers the switching drive rod (8), and then the microswitch (81) is closed.

9. The air heating type cooking pan according to claim 1, **characterized by** also comprising a bracket (10); the bracket (10) being disposed in the pan body (9); the bracket (10) comprising a bracket mesh (101), a short-leg rack (102) and a long-leg rack (103); the short-leg rack (102) and the long-leg rack (103) being respectively disposed on the upper and lower surfaces of the bracket mesh (101).

## Patentansprüche

1. Eine Kochpfanne mit Luftheizung, bestehend aus einem Maschinenkörper (100), einem Deckel (20) und einem Pfannenkörper (9); wobei der besagte Maschinenkörper (100) eine Heizkammer (51) und eine Vorrichtung zur Erzeugung von Heißluft (60) aufweist, die die Heißluft in die besagte Heizkammer (51) bläst, wobei der Pfannenkörper (9) in der besagten Heizkammer (51) angeordnet ist; wobei die besagte Kochpfanne mit Luftheizung einen Drehtellermotor (50) und mindestens drei Stützrollen (4) aufweist; wobei der besagte Drehtellermotor (50) im besagten Maschinenkörper (100) angeordnet ist; wobei eine Motorwelle (501) des besagten Drehtellermotors (50) den besagten Pfannenkörper (9) über ein Antriebsteil dreht; wobei die besagten mindestens drei Stützrollen (4) zirkumferentiell verteilt sind und sich zwischen der Unterseite des besagten Pfannenkörpers (9) und der Unterseite der besagten Heizkammer (51) befinden; **dadurch gekennzeichnet dass** der besagte Maschinenkörper (100) eine untere Schale (1), eine Ablage mit Wärmeisolierung (5), eine obere Schale (40) und eine Seitenplatte (7) aufweist; wobei sich die Ablage mit Wärmeisolierung (5) und die obere Schale (40) auf der unteren Schale (1) befinden; wobei die Oberseite der Ablage mit Wärmeisolierung (5) nach unten eingelassen ist, um die Heizkammer (51) mit einer offenen Oberseite zu bilden; wobei sich die obere Schale (40) an einer Seite der Öffnung der Heizkammer (51) befindet und mit der Seitenplatte (7) verbunden ist; und wobei die Oberfläche der Seitenplatte (7) mit einem Heißluftauslass (71) versehen ist; wobei die Oberseite der Seitenplatte (7) in Richtung der Heizkammer (51) geneigt ist.

2. Die Kochpfanne mit Luftheizung nach Anspruch 1, **dadurch gekennzeichnet, dass** das Antriebsteil ein nicht runder Drehkopf (2) ist, wobei der nicht runde Drehkopf (2) auf dem Boden der Heizkammer (51) angeordnet ist; wobei der Boden des Pfannenkörpers (9) eine nicht runde Nut (91) aufweist, die dem nicht runden Drehkopf (2) entspricht; wobei der nicht runde Drehkopf (2) und die nicht runde Nut (91) so angeordnet sind, dass ein Teil in das andere eingeführt werden kann; wobei sich der besagte Drehtellermotor (50) an der Außenseite des Bodens der Heizkammer (51) befindet; und wobei die Motorwelle (501) den Boden der Heizkammer (51) durchdringt, um mit dem nicht runden Drehkopf (2) verbunden zu werden.

3. Die Kochpfanne mit Luftheizung nach Anspruch 2, **dadurch gekennzeichnet, dass** die besagten Stützrollen (4) zirkumferentiell im gleichen Abstand um die Motorwelle (501) herum angeordnet sind; wobei sich die Stützrollen (4) auf einem Rollenständer (3) befinden und wobei der Rollenständer (3) am Boden der Heizkammer (51) befestigt sind.

4. Die Kochpfanne mit Luftheizung nach Anspruch 1, **dadurch gekennzeichnet, dass** sich die besagte Vorrichtung zur Erzeugung von Heißluft (60) an dem Ort befindet, der von der unteren Schale (1) und von der oberen Schale (40) umgeben ist; wobei die besagte Vorrichtung zur Erzeugung von Heißluft (60) aus einem Zentrifugen-Windrad (601), einem Gebläsemotor (602), einer festen Halterung (604), einem Heizelement (605) und einer Verkleidung mit Wärmeisolierung (606) besteht, wobei die besagte feste Halterung (604) mit der besagten Ablage mit Wärmeisolierung (5) verbunden ist; wobei das vordere Ende des besagten Gebläsemotors (602) mit der Außenseite der besagten festen Halterung (604) verbunden ist; während das andere Ende in Richtung einer Luftansaugöffnung auf der unteren Schale (1) weist; wobei sich das Zentrifugen-Windrad (601) an der Innenseite der festen Halterung (604) befindet und mit dem Gebläsemotor (602) verbunden ist, um eine Übertragung zu bilden; wobei sich das Heizelement (605) am oberen Ende der festen Halterung (604) und in der Nähe des Heißluftauslasses (71) befindet; wobei die Verkleidung mit Wärmeisolierung (606) am oberen Ende der festen Halterung befestigt ist und sich auf der Außenseite des Heizelements (605) befindet; wobei die Verkleidung mit Wärmeisolierung (606) im Innern ein Heizelement enthält und zusammen mit der festen Halterung einen Heißluftkanal bildet; wobei die Öffnung des Heißluftkanals dem Heißluftauslass (71) entspricht.

5. Die Kochpfanne mit Luftheizung nach Anspruch 4, **dadurch gekennzeichnet, dass** ein Luftkanal (11) zwischen der besagten unteren Schale (1) und der besagten Ablage mit Wärmeisolierung (5) gebildet wird; wobei der besagte Luftkanal (11) mit der besagten Luftansaugöffnung des Zentrifugen-Windrads (601) verbunden ist; wobei die Oberfläche der besagten Heizkammer (51) mit einem Heißluftrückführungsloch (52) versehen ist; und wobei das besagte Heißluftrückführungsloch (52) die besagte Heizkammer (51) mit dem besagten Luftkanal (11) verbindet.

6. Die Kochpfanne mit Luftheizung nach Anspruch 4, **dadurch gekennzeichnet, dass** das hintere Ende des besagten Gebläsemotors (602) mit Abstrahlrippen (603) versehen ist, wobei die besagten Abstrahlrippen (603) mit einer Drehwelle des besagten Gebläsemotors (602) verbunden sind, um eine Übertragung zu bilden.

7. Die Kochpfanne mit Luftheizung nach Anspruch 1, **dadurch gekennzeichnet, dass** die Oberfläche der besagten Seitenplatte (7) ebenfalls mit einem Lampenkörper (6) versehen ist; wobei der besagte Deckel (20) ein durchsichtiger Deckel ist; und wobei die Oberseite des besagten Deckels (20) mit einem Griff (201) versehen ist.

8. Die Kochpfanne mit Luftheizung nach Anspruch 1, **dadurch gekennzeichnet, dass** die besagte obere Schale (40) intern mit einem Timer (301) und einem Mikroschalter (81) versehen ist; wobei ein Einstellschaft (302) des besagten Timers (301) aus der oberen Schale (40) herausragt, um mit dem Einstellknopf (30) verbunden zu werden; wobei ein Knopf des besagten Mikroschalters (81) mit einem Ende der Umschalt-Antriebsstange (8) aus der besagten Seitenplatte (7) herausragt; wobei, wenn der Deckel (20) nach unten geschlossen wird, der Deckel (20) die Umschalt-Antriebsstange (8) aktiviert, woraufhin der Mikroschalter (81) geschlossen wird.

9. Die Kochpfanne mit Luftheizung nach Anspruch 1, **dadurch gekennzeichnet, dass** die Vorrichtung ebenfalls eine Halterung (10) enthält; wobei sich die Halterung (10) im Pfannenkörper (9) befindet; wobei die Halterung (10) eine Halterungsmasche (101), ein kurzbeiniges Gestell (102) und ein langbeiniges Gestell (103) aufweist; wobei das kurzbeinige Gestell (102) und das langbeinige Gestell (103) an der oberen bzw. der unteren Oberfläche der Halterungsmasche (101) angeordnet sind.

## Revendications

1. Casserole de cuisson du type à air chaud, comprenant un corps de machine (100), un corps de couvercle (20) et un corps de casserole (9) ; ledit corps de machine (100) étant pourvu d'une chambre de chauffage (51) et d'un dispositif générateur d'air chaud (60) qui souffle de l'air chaud à l'intérieur de ladite chambre de chauffage (51), ledit corps de casserole (9) étant disposé dans ladite chambre de chauffage (51) ; ladite casserole de cuisson de type à chauffage à air comprenant un moteur de plateau rotatif (50) et au moins trois galets de support (4) ; ledit moteur de plateau rotatif (50) est disposé dans ledit corps de machine (100) ; un arbre de moteur (501) dudit moteur de plateau rotatif (50) entraîne ledit corps de casserole (9) pour qu'il tourne par l'intermédiaire d'un élément d'entraînement ; lesdits au moins trois galets de support (4) sont répartis et situés de manière circonférentielle entre la partie inférieure dudit corps de casserole (9) et la partie inférieure de ladite chambre de chauffage (51) ; **caractérisée en ce que** ledit corps de machine (100) comprend une coque inférieure (1), un plateau d'isolation thermique (5), une coque supérieure (40) et une plaque latérale (7) ; le plateau d'isolation thermique (5) et la coque supérieure (40) sont disposés respectivement sur la coque inférieure (1) ; la face supérieure du plateau d'isolation thermique (5) est renfoncée vers le bas pour former la chambre de chauffage (51) avec une partie supérieure ouverte ; la coque supérieure (40) est située sur un côté de l'ouverture de la chambre de chauffage (51) et est reliée à la plaque latérale (7) ; et la surface de la plaque latérale (7) est pourvue d'un orifice d'évacuation d'air chaud (71) ; la partie supérieure de la plaque latérale (7) s'incline vers ladite chambre de chauffage (51).

2. Casserole de cuisson du type à air chaud selon la revendication 1, **caractérisée en ce que** ledit élément d'entraînement est une tête rotative non ronde (2) ; la tête rotative non ronde (2) est située au niveau de la partie inférieure de la chambre de chauffage (51) ; la partie inférieure du corps de casserole (9) est pourvue d'un renfoncement non rond (91) correspondant à la tête rotative non ronde (2) ; la tête rotative non ronde (2) et le renfoncement non rond (91) sont mis en correspondance par insertion ; ledit moteur de plateau rotatif (50) est situé sur le côté extérieur de la partie inférieure de la chambre de chauffage (51) ; l'arbre de moteur (501) pénètre la partie inférieure de la chambre de chauffage (51) pour être connecté à la tête rotative non ronde (2).

3. Casserole de cuisson du type à air chaud selon la revendication 2, **caractérisée en ce que** lesdits galets de support (4) sont répartis de manière circonférentielle à un intervalle égal autour de l'arbre de moteur (501); les galets de support (4) sont disposés sur le support de roue (3) et le support de roue (3) et la partie inférieure de la chambre de chauffage (51) sont fixes.

4. Casserole de cuisson du type à air chaud selon la revendication 1, **caractérisée en ce que** ledit dispositif générateur d'air chaud (60) est disposé dans l'espace entouré par la coque inférieure (1) et la coque supérieure (40) ; ledit dispositif générateur d'air chaud (60) est composé d'une roue à vent centrifuge (601), d'un moteur souffleur (602), d'un support fixe (604), d'un élément chauffant (605) et d'une enveloppe d'isolation thermique (606) ; ledit support fixe (604) est relié au dit plateau d'isolation thermique (5) ; l'extrémité avant dudit moteur souffleur (602) est reliée au côté externe dudit support fixe (604), tandis que l'autre extrémité fait face à une ouverture d'aspiration d'air sur la coque inférieure (1) ; la roue à vent centrifuge (601) est disposée sur le côté interne du support fixe (604) et est en connexion avec le moteur souffleur (602) de manière à assurer une transmission ; l'élément chauffant (605) est disposé au niveau de l'extrémité supérieure du support fixe (604) et à proximité de l'orifice d'évacuation d'air chaud (71); l'enveloppe d'isolation thermique (606) est fixée au niveau de l'extrémité supérieure du support fixe et située sur le côté externe de l'élément chauffant (605) ; l'enveloppe d'isolation thermique (606) contient l'élément chauffant à l'intérieur et forme, conjointement avec le support fixe, un canal d'air chaud ; et le port du canal d'air chaud correspond à l'orifice d'évacuation d'air chaud (71).

5. Casserole de cuisson du type à air chaud selon la revendication 4, **caractérisée en ce qu'**un canal d'air (11) est formé entre ladite coque inférieure (1) et ledit plateau d'isolation thermique (5) ; ledit canal d'air (11) communique avec ladite ouverture d'aspiration d'air de la roue à vent centrifuge (601) ; la surface de ladite chambre de chauffage (51) est pourvue d'un orifice de recyclage d'air chaud (52) ; et ledit orifice de recyclage d'air chaud (52) relie ladite chambre de chauffage (51) et ledit canal d'air (11).

6. Casserole de cuisson du type à air chaud selon la revendication 4, **caractérisée en ce que** l'extrémité arrière dudit moteur souffleur (602) est pourvue d'ailettes de radiation (603) et lesdites ailettes de radiation (603) sont en connexion avec un arbre rotatif dudit moteur souffleur (602) de manière à assurer une transmission.

7. Casserole de cuisson du type à air chaud selon la revendication 1, **caractérisée en ce que** la surface de ladite plaque latérale (7) est également pourvue d'un corps de lampe (6) ; ledit corps de couvercle (20) est un couvercle transparent ; et la partie supérieure dudit corps de couvercle (20) est pourvue d'une poignée (201).

8. Casserole de cuisson du type à air chaud selon la revendication 1, **caractérisée en ce que** ladite coque supérieure (40) est pourvue à l'intérieur d'un minuteur (301) et d'un micro-commutateur (81) ; un arbre d'ajustement (302) dudit minuteur (301) s'étend en dehors de ladite coque supérieure (40) pour se connecter au bouton d'ajustement (30) ; un bouton dudit micro-commutateur (81) est relié à une extrémité d'une tige d'entraînement de commutation (8) ; l'autre extrémité de ladite tige d'entraînement de commutation (8) s'étend en dehors de ladite plaque latérale (7) ; dans le processus où le corps de couvercle (20) est fermé vers le bas, le corps de couvercle (20) déclenche la tige d'entraînement de commutation (8) et ensuite le micro-commutateur (81) est fermé.

9. Casserole de cuisson du type à air chaud selon la revendication 1, **caractérisée en ce qu'**elle comprend en outre un support (10) ; le support (10) étant disposé dans le corps de casserole (9) ; le support (10) comprenant un filet de support (101), un bac à pieds courts (102) et un bac à pieds longs (103) ; le bac à pieds courts (102) et le bac à pieds long (103) étant disposés respectivement sur les surfaces supérieure et inférieure du filet de support (101).
